# EUROPEAN PATENT SPECIFICATION

(11) **EP 1 306 119 B1**
(45) Date of publication and mention of the grant of the patent: **24.05.2006**
(21) Application number: 02024468.7
(22) Date of filing: 29.10.2002
(51) Int. Cl.: B01D 35/027, B01D 29/21

(54) **In-tank fuel filter**
Im Tank eingebauter Brennstofffilter
Filtre pour réservoir à carburant

(30) Priority: 29.10.2001 JP 2001330321
(43) Date of publication of application: 02.05.2003
(73) Proprietor: Kyosan Denki Co., Ltd., Sashima-gun, Ibaraki-pref., 306-0206 (JP)
(72) Inventor: Ito, Kouichi, Kyosan Denki Co., Ltd., Sashima-gun, Ibaraki-pref. 306-0206 (JP)
(74) Representative: Winter, Brandl, Fürniss, Hübner Röss, Kaiser, Polte Partnerschaft Patent- und Rechtsanwaltskanzlei

(56) References cited:
- EP-A- 1 174 170
- US-A- 5 547 568
- US-A- 5 716 522
- US-B1- 6 241 899

## Description

### BACKGROUND OF THE INVENTION

### 1. Field of Invention

The invention relates to a fuel filtration device. In particular, the invention relates to an in-tank type fuel filtration device that is installed in a fuel tank such as for an automobile.

### 1. Description of Related Art

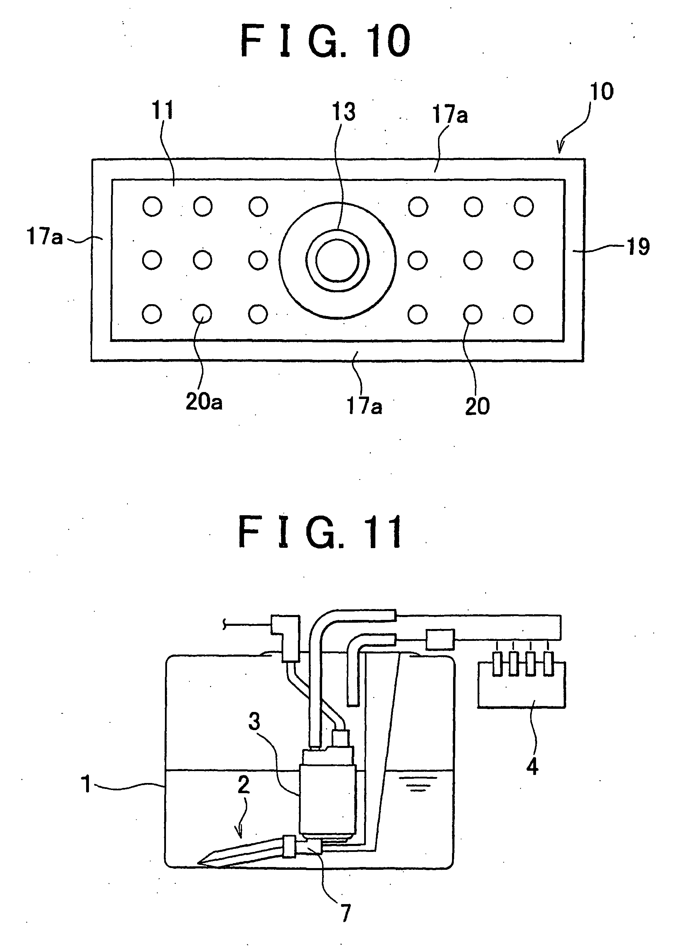

FIG. 11 shows a fuel tank having a fuel filtration device, installed in an automobile as disclosed in EP1 174 170 A2. A fuel pump 3 that supplies fuel to a fuel injection device 4 is located in the fuel tank 1. A fuel filtration device 2 is attached via a connecting member 7 to a fuel intake side that is on an upstream side of the fuel pump 3.

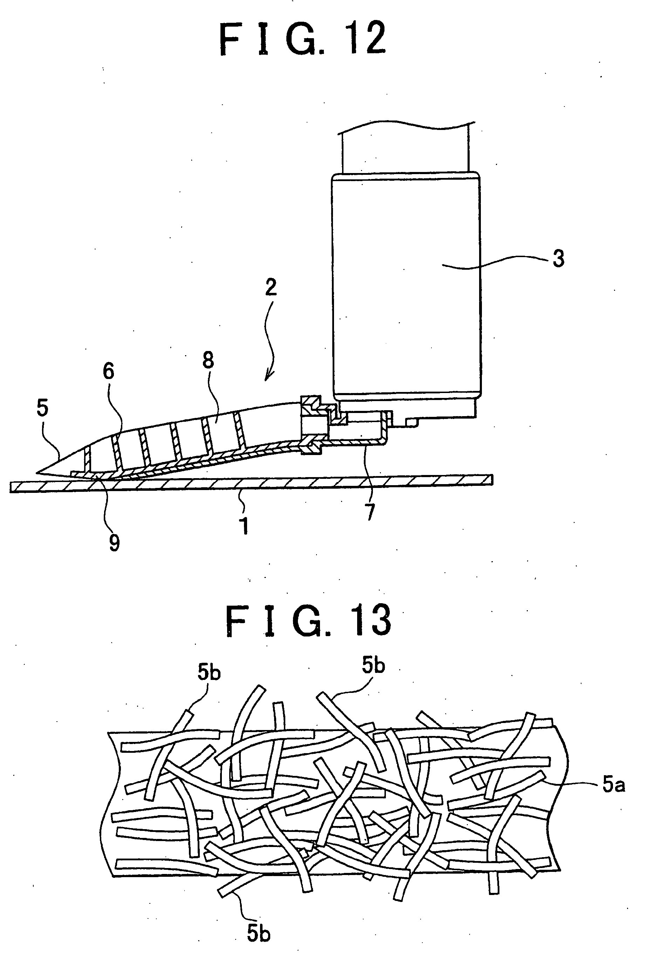

FIG. 12 shows the details of the fuel filtration device 2. The fuel filtration device 2 is connected to the fuel pump 3 via the connecting member 7, and because another edge of the fuel filtration device 2 contacts a bottom wall 9 of the fuel tank 1, the fuel pump 3 can intake sufficient fuel via the filtration device 2 even if the fuel level is low.

The fuel filtration device 2 includes a filtration medium 5 that is made of a non-woven fabric having a plurality of holes and made of a synthetic resin, and a protector 6 that is located in the inner portion. The protector 6 is made of a synthetic resin and prevents adherence between filter mediums 5, and sufficiently secures an inner portion space 8 and maintains a stable fuel passage.

An outline of the assembly of the fuel filtration device 2 that includes the three parts of the filter medium 5, the protector 6 and the connecting member 7 is as follows. The filter medium 5 that is made of a non-woven fabric and is folded vertically, or the filter medium 5 that has two layers is provided, and a through hole for the connecting member 7 is formed in a side surface of the filter medium 5. After that, the connecting member 7 is inserted inside the through hole, and the filter medium 5 around the through hole is clamped by the connecting member 7 and the protector 6, and the filter medium 5, the protector 6 and the connecting member 7 are assembled such that they are airtight. After that, the periphery of the filter medium 5 is sealed such that the protector 6 is wrapped therein using ultrasonic welding, etc., and the bag shape fuel filtration device 2 is formed.

Because the protector 6 is provided on the inner portion of this kind of intake type fuel filtration device 2, adherence between filter mediums 5 can be prevented and an inner portion space 8 can be sufficiently secured. Further, by attaching the connecting member 7 to the filter medium 5, the fuel filtration device 2 and the fuel pump 3 can be easily and reliably connected.

The non-woven fabric that is used as the filter medium is made from material fibers 5a that use polyester, polypropylene, rayon, glass, acetate, nylon, etc. The non-woven fabric is made by gathering the material fibers 5a and forming it into a cloth form, and is porous, making it suitable for use as a filter medium. However, as can be seen from the cross section of the filter medium shown in FIG. 13, most of the fiber hairs 5b on the surface of the filter medium are raised.

However, the in-tank type fuel filter device 2 is attached contacting a bottom wall 9 of the fuel tank 1 so that even when the fuel in the fuel tank 1 is at a low level it can sufficiently intake the fuel. Therefore, the fuel tank 1 constantly vibrates during driving, and the low surface of the fuel filtration device is in friction with the bottom wall 9 of the fuel tank 1. Therefore, the filtration device 2 that is formed only of non-woven fabric wears on the low surface and sometimes there is breakage.

Also, when the bag shape filter medium is formed from the non-woven fabric, most of the fiber hairs 5b on the inner surface of the filter medium 5 are also raised. The fiber hairs 5b peel away from the material fibers 5a and mix with the fuel and flow into the fuel pump 3 and lock the fuel pump 3 at times.

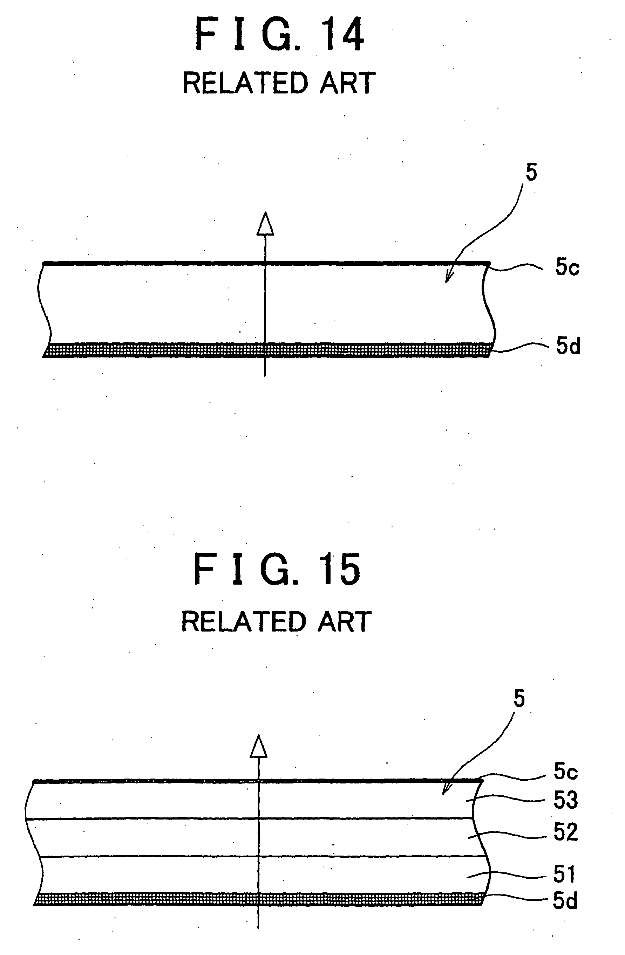

According another related art, in order to prevent the peeling of the fiber hairs 5b on the inner surface of the filter medium and the friction from the bottom wall 9 of the fuel tank 1 on the outer surface, a protective layer is provided on the internal and outer surfaces. In other words, as shown in FIG. 14, on the inner surface side of the filter medium 5, in other words, the side where the protector 6 is disposed, a relatively coarse cover layer 5c for preventing raising of hair is disposed, and on an opposite surface, in other words, an outer surface on the side that contacts the bottom wall 9 of the fuel tank 1, a mesh screen layer 5d is disposed, and the three layers are fixed in place by performing heat welding at a plurality of spots. Further, the outlined arrow as shown in FIG. 14 and 15 indicates the flow direction of the fuel from the outer side of the filter medium 5 to the inner side.

Also, recently, in order to improve the filtration capability of the filter medium 5, the filter medium 5 has a multi-layer structure that includes a coarse layer or a dense layer. FIG. 15 shows the filter medium having a multi-layer structure that includes a coarse layer or a dense layer. The filter medium 5 with a multi-layer structure is formed from three layers of a coarse layer 51, a middle layer 52 and a dense layer 53. The coarse layer 51 side is the fuel tank 1 side, and the dense layer 53 side is the inner surface side of the filter medium 5 where the protector 6 is disposed, and, as in FIG. 14, the fuel flows in the direction of the outlined arrow that shows the flow direction of the fuel from the outer side of the filter medium 5 to the inner side. The fuel is drawn from the coarse layer 51 side and as it passes through the middle layer 52 and the dense layer 53, large and small foreign materials are filtered by each layer, and the fuel flows into the filter medium 5 where the protector 6 is provided.

However, even in the filter medium 5 with a multi-layer structure, the problems mentioned above, in other words, the problem with the wear from friction with the bottom wall 9 of the fuel tank 1 on the coarse layer 51 side, and the problem with the peeling of the fiber hairs 5b of the material fibers 5a on the dense layer side and the adverse effect on the fuel pump 3 occur. Therefore, even in this type of filter medium with a three-layer structure, the same protective means as explained in FIG, 14 is adopted.

In other words, as shown in FIG. 15, the relatively coarse cover layer 5c for preventing raising of hair is disposed on the inner surface side of the filter medium 5, that is, the dense layer 53 side where the protector 6 is disposed. A mesh screen layer 5d is disposed on a surface opposing the surface where the cover layer 5c is disposed, that is, on an outer surface of the coarse layer 51 side that contacts the bottom wall 9 of the fuel tank 1, and the five layers are fixed in place by performing heat welding at a plurality of spots.

The filter medium with a three-layer structure in FIG. 14, and the filter medium with a five-layer structure in FIG. 15 can both solve the above mentioned problems and pose no problems as a filter medium. However, as mentioned above, the filter mediums with a separate three-layer structure and a separate five-layer structure use the cover layer 5c and the screen layer 5d and members that have no relation with the filter medium 5. Therefore, the number of components increase, and processes for attaching the cover layer 5c and the screen layer 5d are necessary, and production costs increase.

Further, the fuel filtration device 2 is formed in a bag shape by cutting the filter medium to a prescribed length and folding one filter medium, or by laying two element filters one on top of the other. When using a filter medium with a three-layer structure or a five-layer structure, the filter mediums are only fixed in place by performing heat welding at a plurality of spots as mentioned above. Therefore, for portions that are not heat welded, because each layer is a separate body, the fiber hairs 5b inevitably become raised as in FIG. 13 on the cross section of the filter medium.

Therefore, when the filter medium is formed by folding the filter medium, there is the fear that the fiber hairs 5b will become mixed in the filter medium 5 where the protector 6 is disposed, after which the fiber hairs will peel and adversely affect the fuel pump 3.
From US 6,241,899 B1 is known a disposable filter bag for automatic and manual pool water filtering assemblies. The filter bag is formed from a water-permeable, non-woven fabric which can be coated with adhesive material so that the seams can be fused together instead of sewn. The preferred material used for making the filter bag is a non-woven fabric comprised of fibers formed into a web and bonded to each other with thermoplastic adhesive fibers.
US 5,547,568 and US 5,716,522 disclose a fuel filtration device in accordance with the preamble of claim 1.
More specifically, US 5,547,568 discloses a fuel filter formed by a bag-shaped mesh serving as a bag main body, and a frame which is inserted in the interior portion of the mesh. The mesh is made hollow by bent portions formed at the frame, which push and expand the mesh from the inner side thereof. Further, the mesh is a two-layer structure of a non-woven fabric which is folded in two such that two layers thereof are superposed, and enfolds the frame.
US 5,716,522 relate to an in-tank fuel filter including a body comprising layers of spun bonded and melt blown filtration media and a fitting for mounting the filter to an in-tank fuel pump inlet. An outer layer of the body is preferably spun bonded, i.e. woven, material which exhibits good abrasion resistance. One or more inner layers of melt blown, i.e. non-woven, filtration media define smaller pore sizes and thus exhibit smaller particle filtration capability.

### SUMMARY OF THEINTENTION

An object of the invention is to provide a fuel filtration device with lower production cost by reducing the number of components and shortening the assembly time.
This object is solved by the subject matter of claim 1.

A fuel filtration device according to the invention includes a filter medium forming at least two opposing faces, an internal space where fluid accumulates and that is surrounded by the filter medium, and a communicating path which provides communication between the inner portion space and an outside of the inner portion, and delivers the fluid in the inner portion space to the outside of the inner portion. The filter medium is a non-woven fabric made of material fibers and adhesive fibers, and by melting the adhesive fibers, the fibers are joined.

According to the invention, because it is possible to create a fuel filtration device using non-woven fabric, it is possible to reduce the weight. Also, because the adhesive fibers is melted and the fibers are joined, the raising of the fiber hair 5b shown in FIG. 13 is reduced even on the cross section of the filter medium, as well as on the surface of the fiber medium. Therefore, the peeling of the fiber hair 5b is reduced. Further, because the adhesive fibers that coat the outside periphery of the material fibers remain, the strength of the entire non-woven fabric increases, and the fuel filtration device can be formed using only the non-woven fabric. As a result, the cover layer 5c and the screen layer 5d are not always necessary.

The filter medium has a multi-layer structure in which at least two filter layers are layered. The filter medium has an integrated structure in which the filter medium fibers within and layer and adjacent filter layers of multi layers are joined by melting the adhesive fibers. Further, the multi-layer structure has a coarse and dense gradient formed by a coarse layer and a dense layer. With this structure, in a three-layer structure having a coarse and dense gradient shown in FIG. 15 as well, the cover layer 5c and the screen layer 5d are not always necessary Further, the filter medium fibers are of course joined as well as the adjacent filter layers. Therefore, the filter medium with a three layer integrated structure can be easily formed. Further, even when the filter medium with a multi-layer structure is cut, the fiber hair does not raise on the cross-section.

Also, the filter medium may include a surface made of the non-woven fabric and a surface made of the mesh screen. In this case, the surface made of the mesh screen forms the bottom portion of the fuel filtration device and becomes the surface that touches the bottom wall of the fuel tank, whereby the durability of the surface further increases.

### BRIEF DESCRIPTION OF THE DRAWINGS

FIG. 1 is a sectional view of a fiber of the invention.

FIG. 2 is a sectional view of a single layer filter medium.

FIG. 3 is a sectional of a filter medium with a three-layer integrated structure of the invention.

FIG. 4 is a sectional view showing a fuel filtration device according to the first embodiment that is formed using a non-woven fabric of the invention.

FIG. 5 is a sectional view taken along line V to V in FIG. 4.

FIG. 6 is a plane view of the fuel filtration device in FIG. 4.

FIG. 7 is a sectional view showing the fuel filtration device according to a different embodiment of the invention.

FIG. 8 is a sectional view showing the fuel filtration device according to a second embodiment that is formed using the non-woven fabric of the invention.

FIG. 9 is a sectional view showing the fuel filtration device according to a third embodiment that is formed using the non-woven fabric of the invention.

FIG. 10 is a plane view of the fuel filtration device in FIG. 9.

FIG. 11 is a sectional view showing the installation conditions of an in-tank type fuel filtration device.

FIG. 12 is a sectional view of the in-tank type fuel filtration device.

FIG. 13 is a sectional view of the filter medium that is related art of the invention.

FIG. 14 is a sectional view of a filter medium with a three-layer separate structure that is related art of the invention.

FIG. 15 is a sectional view of a filter medium with a five-layer separate structure that is related art of the invention.

### DETAILED DESCRIPTION OF PREFERRED EMBODIMENTS

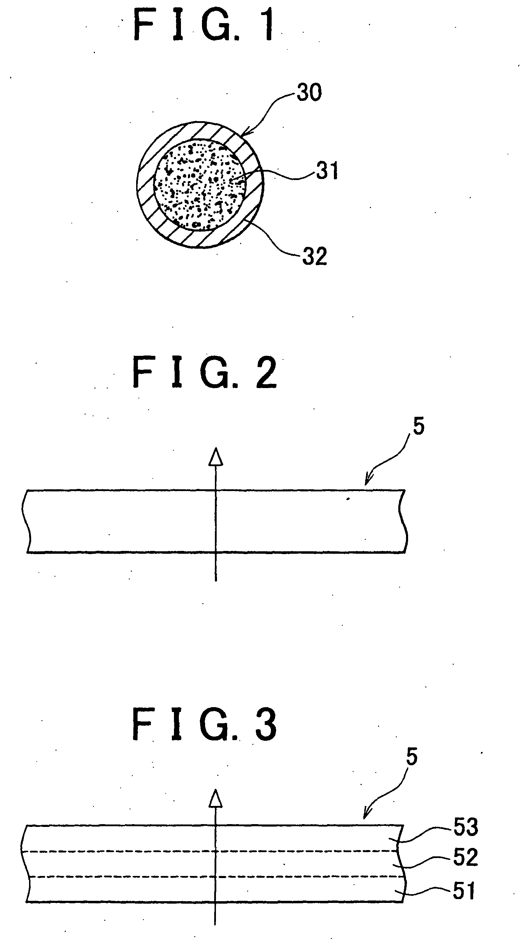

FIG. 1 is a sectional view of one fiber of the invention, FIG. 2 is a sectional view of a single layer filter medium, and FIG. 3 shows a sectional view of a filter medium with a three-layer integrated structure of the invention. The invention has the characteristic of using a fiber shown in FIG. 1.

In other words, a fiber 30 is made of a material fiber 31 of a central portion and an adhesive fiber 32 that coats the outside periphery of the material fiber 31. The material fiber 31 is formed from polyester, polypropylene, rayon, glass, acetate, and the like. For the adhesive fiber 32, for example, modified polyester, modified polyethylene, modified polypropylene, nylon, or the like is used, and the adhesive coats the outside periphery of the material fiber 31 by a known technique. In this case, the melting point of the material fiber 31 is approximately 250 °C, and the adhesive fiber 32 with a lower melting point, for example, 40 to 240 °C, is used. The adhesive fiber 32 with such a melting point is used so that the material fiber 31 does not melt.

In the invention, the fiber 30 shown in FIG. 1 is used, and a non-woven fabric is manufactured from the fiber 30, and by heat forming the non-woven fabric a filter medium 5 is manufactured. Next, using the filter medium 5, a fuel filtration device 2 is formed. Further, there is no need to coat all of the material fibers 31 with the adhesive fibers 32, and a portion of the material fibers 31 may be used as they are.

The filter medium 5 is heat formed as follows. In other words, for example, for the mixture of the material fibers that are located in the molding die and the adhesive fibers, the press process is carried out in a heated atmosphere such as a high temperature bath. Alternatively the mixture is placed in a heated molding die and the press process is carried out. By this method, the mixture of the material fibers and adhesive fibers can be easily formed into a filter medium of a desired shape. The temperature of the heated atmosphere or the heated molding die is a temperature at which at least ingredients for joining the adhesive fibers with the material fibers melt and the adhesive fibers are joined with the material fibers, for example, a temperature of 40 to 240 °C.

The fiber density of the adhesive fibers after heat forming changes depending on the melting point temperature and the heating time. To lower the fiber density (in this case, there are many spaces between fibers and the filter function is sufficient, but the strength deteriorates), adhesive fibers with a low melting point are used and the heating time is shortened. On the other hand, to increase the fiber strength of the adhesive fibers (in this case, there are few spaces between fibers so the filter function is lowered, but the strength increases), adhesive fibers with a high melting point are used and the heating time is elongated. By doing so, the strength of the fibers is improved, and the fibers can be further resinated. However, the fiber density is more variable depending on the combination of melting point and heating time.

The filter medium 5 of the invention is heat formed so that it can sufficiently maintain the original filter function, while also attaining the appropriate strength so that it does not wear even when it is in friction with the a bottom wall 9 of a fuel tank 1.

FIG. 2 shows a single layer filter medium 5. The bold outer line indicates that the fiber hair is not raised, and, therefore, a cover layer 5c and a screen layer 5d as shown in FIGS. 14 and 15 are not necessary. Further, the outlined arrow indicates the flow direction of the fuel from the outer side of the filter medium 5 to the inner side. FIG. 3 shows a filter medium with a three-layer integrated structure according to the invention. The filter medium has a three-layer structure that includes a coarse layer 51, a middle layer 52 and a dense layer 53. Then, the coarse layer 51 side is the fuel tank 1 side, and the dense layer 53 side is both of the inner sides of the filter medium 5 where a protector 6 is disposed. As in FIG. 2, the fuel flows in the direction of the outlined arrow that shows the flow direction of the fuel from the outer side of the filter medium 5 to the inner side. The fuel is drawn from the coarse layer 51 side, and as it passes through the middle layer 52 and the dense layer 53, large and small foreign materials are filtered by each layer, and the fuel flows into the filter medium 5 where the protective layer is provided. When a multi-layer structure having a coarse and dense gradient is heat formed, because not only the fibers of the filter medium 5, but also the adjacent filter mediums are joined, the entire filter medium is fully integrated. In FIG. 3, the borders between each layer are shown with a bold dotted line, but the layers are joined and integrated. Naturally, the fiber hairs on the outside periphery are not raised as in FIG. 2.

Hereinafter, fuel filtration devices in various embodiments that are formed using the filter medium 5 of the invention will be explained.

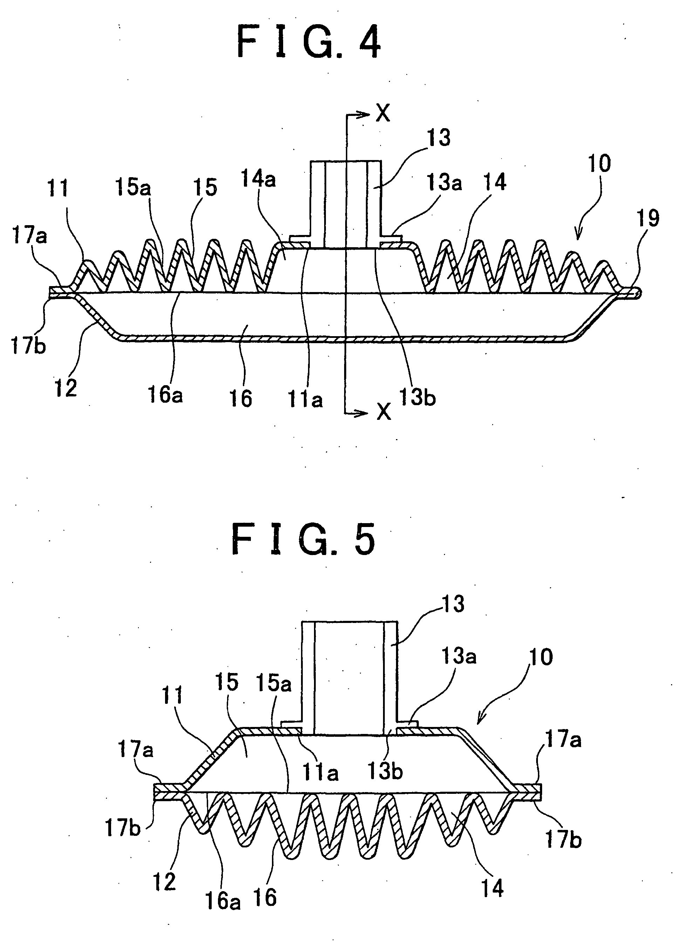

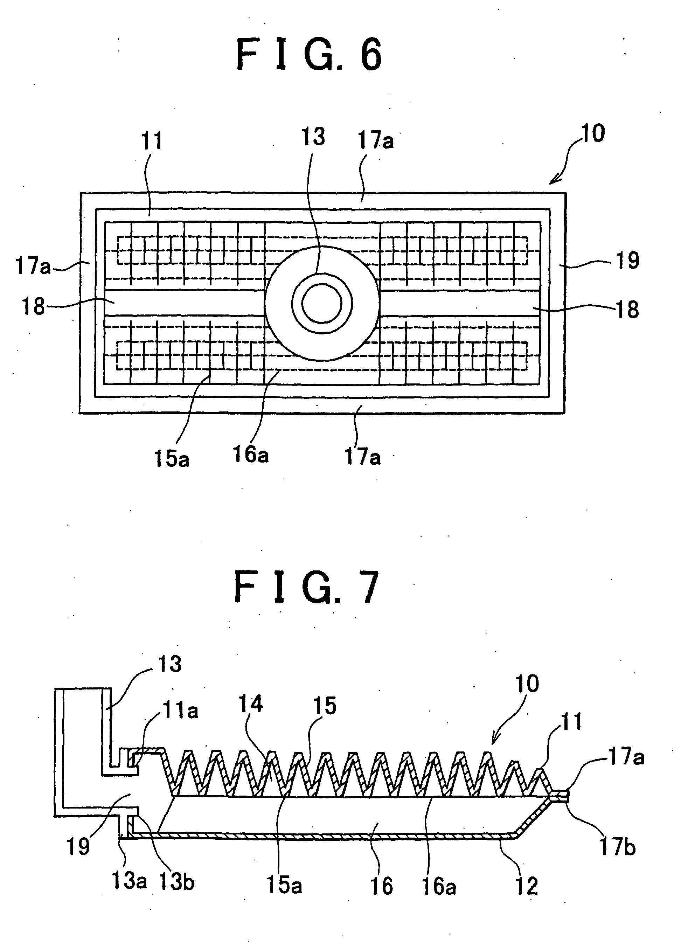

FIG. 4 through FIG. 6 show the fuel filtration device related to the first embodiment of the invention. FIG. 4 is a sectional view, FIG. 5 is a sectional view taken along line V to V in FIG. 4, and FIG. 6 is its plane view. The filtration device according to the first embodiment is formed by folding one filter medium.

The invention will be explained as an in-tank type fuel filtration device. As shown in FIG. 6, the plane view of a fuel filtration device 10 is substantially rectangular. The fuel filtration device 10 is connected with the upstream side of a fuel pump 3 that is located in the fuel tank 1 as shown in FIG. 11 and FIG. 12 via a connecting member 13, and foreign matter in the fuel is filtered and only the filtered fuel is supplied to the fuel pump 3.

The fuel filtration device 10 is formed from one filter medium (5) that includes a portion that is approximately one-half on the side to which the connecting member 13 is connected and a portion that is approximately one-half on the side to which the connecting portion 13 is not connected. The portion that is approximately one-half on the side to which the connecting portion 13 is connected forms an upper side filter medium portion 11 and the portion that is approximately one-half on the side to which the connecting portion 13 is not connected forms a lower side filter medium portion 12. Then the filter medium 5 is folded at a central folding portion 19, and overlapping periphery portions 17a and 17b of filter medium portions 11, 12 are bonded using a heat melting method such as ultrasonic welding or electric welding, or they are joined using an adhesive, and an inner portion space 14 is formed in the inner portion.

The upper side filter medium portion 11 and the lower side filter medium portion 12 are formed from the non-woven fabric explained in FIG. 1 and FIG. 3, and through a method such as folding, a plurality of concavities and convexities 15 and 16 are formed in each of the filter medium portions 11 and 12. As shown in FIG. 4 and FIG. 5, both of the inner side end portions 15a and 16a of the concavities and convexities 15 and 16 contact each other. In addition, as shown in FIG. 6, they are straight lines in the plane view, and intersect at 90° angles. The inner side end portions 15a and 16b of the concavities and convexities 15 and 16 may simply come in contact. In order to further strengthen the filtration device, they are joined using heat welding or adhesive. By forming the upper side filter medium portion 11 and the lower side filter medium portion 12 in this kind of shape, it is possible to provide an inner portion space 14 in the inner portion of the fuel filtration device 10. As a result, because it is possible to fully secure the fuse filtration device 10, it is possible to eliminate a protector 6 provided in the inner portion of the fuel filtration device 10 shown in FIG.11 and FIG. 12. Of course, the protector 6 may be used as needed.

A central inner portion space 14a without concavity and convexities is formed in the central portion of the upper side filter medium portion 11, and a through hole 11 a into which the end portion of the connecting member 13 can be inserted is provided on the upper side filter medium portion 11 of the central inner portion space. Also, a flange 13a and a tubular protruding portion 13b that extends to the end of the flange 13a are provided on the end of the connecting member 13. The tubular protruding portion 13b is inserted in the through hole 11 a, and the outer surface of the upper side filter medium portion 11 around the through hole 11a and the surface of the flange 13a are fixed using an adhesive. The other edge of the connecting member 13 is connected to the fuel pump 3 that is located in the fuel tank 1 as shown in FIG. 11 and FIG. 12.

Further, according to the embodiment, as shown in FIG. 4 and FIG. 5, the offset angle of the inner side end portions 15a and 16a of the upper side filter medium 11 and the lower side filter medium 12 is 90 degrees. However, the intersection angle can be made smaller as long as all of the fuel that enters into the inner portion of the fuel filtration device 10 can flow until the central inner portion space 14a that is formed on the downstream side of the connecting member 13 that is integrally formed with the upper side filter medium portion 11.

Also, the inner side end portions 15a and 16a of both the concavities and convexities 15 and 16 are straight lines in the plane view, but may also be a curved line or a zigzag. Also, the shape of the filter medium 5 is not limited to the rectangular shape shown in FIG. 6, and may be square or circular. In the above, the example using the non-woven fabric that was explained using FIG. 1 and FIG. 3 for the upper side filter medium portion 11 and the lower side filter medium portion 12 was explained. The upper side filter medium portion 11 uses the non-woven fabric, and the lower side filter medium portion 12 forms a lower surface of the fuel filtration device 10 and contacts the bottom wall of the fuel tank 1 with the fuel filtration device 10 positioned inside the fuel tank 1. Therefore, when the fuel tank 1 shakes from vibrations, the lower side filter medium portion 12 comes in friction with the bottom wall 9 of the fuel tank 1, and in the worst case the lower side filter medium portion 12 will break. In order to reduce such adverse effects, by forming the lower side filter medium portion 12 material from mesh screen, durability can be improved. Further, the lower side filter medium portion 12 is formed from the non-woven fabric as shown in FIG. 1 and FIG.3, and mesh screen may also be disposed on the outside periphery of the lower side filter medium portion 12 that is formed from the non-woven fabric. The mesh screen may be a known coarsely woven synthetic resin screen that has many openings, or a thin flat screen with a plurality of holes.

Because the fuel filtration device 10 uses a mixture of material fibers and adhesive fibers as the non-woven fabric in such a manner, even if the concavities and convexities are integrally formed with the filter medium 5, the strength of the concavities, and convexities can be improved, and the surface area can be increased by providing a plurality of concavities and convexities. In addition, because the inner portion space 14 can be sufficiently secured due to the concavities and convexities, the fuel that entered the inner portion space 14 from the filter medium portions 11 and 12 flows quickly to the central inner portion space 14, and the intake efficiency of the fuel pump 3 can be improved accordingly.

In the upper side filter medium portion 11, a strip passage 18 in which the concavities and convexities for improving the fuel flow and for satisfactorily discharging the air in the fuel are not formed is provided lengthwise along the rectangle in the direction that intersects the direction of the concavities and convexities and in a symmetrical position that sandwiches the connecting member 13. Because the strip passage 18, the fuel and air that enters the inner portion space 14 flows smoothly to the connecting member 13 via the central inner portion space 14a. Therefore, even if the air enters the fuel filtration device 10, it is easily discharged without stopping in the concavities and convexities. Naturally, the concavities and convexities that are formed in the upper side filter medium portion 11 can be provided in the same lengthwise direction of the rectangle as the direction of the strip passage 18, and the concavities and convexities that are formed in the lower side filter medium portion 12 can be provided in a direction that intersects at right angles the direction in which the concavities and convexities in the upper side filter medium portion 11 are formed. When positioning the concavities and convexities in such a manner, the strip passage 18 is not necessary.

FIG. 7 shows a modified example of the first embodiment. In the modified example, a plurality of concavities and convexities is provided on the filter medium. The filter medium is formed by folding one filter medium that has the upper side filter medium portion 11 and the lower side filter medium portion 12 at the folding portion 19 (in FIG. 17 it is hidden by the connecting member 13). Then, the connecting member 13 is connected to the folding portion.

In other words, the fuel filtration device 10 is formed from the non-woven fabric of the invention shown in FIGS. 1 to 3, and is formed from the upper filter medium portion 11 and the lower side filter medium portion 12 that have a plurality of concavities and convexities. Both of the filter medium portions 11 and 12 are formed by folding one filter medium at the folding portion 19 at the substantial center. A through hole 11a into which the end portion of the connecting member 13 can be inserted is provided on the folding portion 19. Also, a flange 13a and a tubular protruding portion 13b that extends to the end of the flange 13a is provided on the end of the connecting member 13. The tubular protruding portion 13b is inserted in the through hole 11a, and the outer surface of the upper side filter medium portion 11 around the through hole 11a and the surface of the flange 13a are fixed using an adhesive. After folding, as in the first embodiment, the periphery portions 17a and 17b of both filter medium portions 11 and 12 are bonded using a heat welding method such as ultrasonic welding or electric welding, or they are joined using an adhesive, and an inner portion space 14 is formed in the inner portion. The other structures are the same as those of the first embodiment and will therefore be omitted.

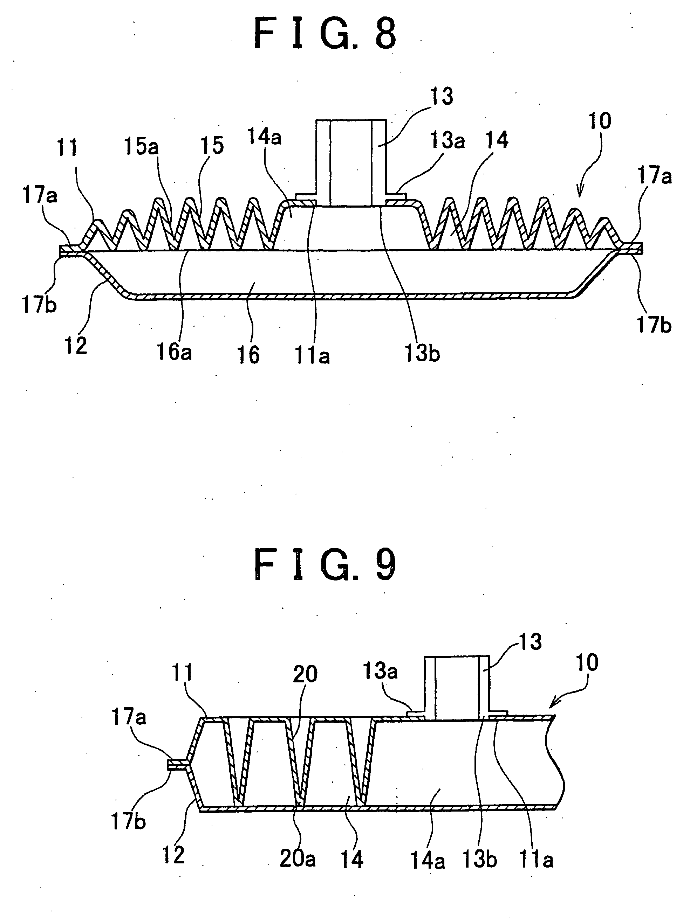

FIG. 8 shows the fuel filtration device according to a second embodiment of the invention. The difference with the first embodiment is that while in the first embodiment the fuel filtration device 10 is formed by a one-part filter medium, in the second embodiment, the fuel filtration device 10 is formed by two separate filter medium portions. Further, the side view and the plane view of the filtration device 10 shown in FIG. 8 are the same as in FIG. 5 and FIG. 6.

In other words, the fuel filtration device 10 is formed from two filter mediums portion that include a filter medium portion 11 that is approximately one-half on the side to which the connecting member 13 is connected and a filter medium portion 12 that is approximately one-half on the side to which the connecting portion 13 is not connected. The portion that is approximately one-half on the side to which the connecting portion 13 is connected forms the upper side filter medium portion 11 and the portion that is approximately one-half on the side to which the connecting portion 13 is not connected forms the lower side filter medium portion 12. Then, both fider medium portions 11 and 12 are overlapped on top of one another. Contacting periphery portions 17a and 17b are bonded using a heat welding method such as ultrasonic welding or electric welding, or they are joined using an adhesive, and an inner portion space 14 is formed in the inner portion.

The upper side filter medium portion 11 and the lower side filter medium portion 12 are formed from the non-woven fabric explained in FIG. 1 and FIG. 3, and through a method such as folding, a plurality of concavities and convexities 15 and 16 are formed in each of the filter medium portion 11 and 12. As shown in FIG. 8 and FIG. 5, both of the inner side end portions 15a and 16a of the concavities and convexities 15 and 16 contact each other In addition, as shown in FIG. 6, they are straight lines in the plane view, and intersect at 90° angles. The inner side end portions 15a and 16b of the concavity and convexity 15 and 16 may simply come in contact. In order to further strengthen the filtration device, it is joined using heat welding or adhesive. By forming the upper side filter medium portion 11 and the lower side filter medium portion 12 in this kind of shape, it is possible to provide an inner portion space 14 in the fuel filtration device 10. As a result, because it is possible to fully strengthen the fuel filtration device 10, it is possible to eliminate a protector 6 provided in the fuel filtration device 10 shown in FIG.11 and FIG. 12. Naturally, the protector 6 may be used as needed:

A central inner portion space 14a without concavities and convexities is formed in the central portion of the upper side filter medium portion 11, and a through hole 11a into which the end portion of the connecting member 13 can be inserted is provided on the upper side filter medium portion 11 of the central inner portion space 14. Also, a flange 13 a and a tubular protruding portion 13b that extends to the end of the flange 13 are provided on the end of the connecting member 13. The tubular protruding portion 13b is inserted in the through hole 11a, and the outer surface of the upper side filter medium portion 11 around the through hole 11a and the surface of the flange 13 are fixed using an adhesive. The other edge of the connecting member 13 connected to the fuel pump 3 that is located in the fuel tank 1 as shown in FIG. 11 and FIG. 12.

Further, according to the second embodiment, because the fuel filtration device 10 is formed by overlapping two filter medium portions the material of both filter medium portions can be easily changed, and in order to improve the durability of the lower filter medium portions 12, the material can be formed from mesh screen and the like. The other structures are the same as those of the first embodiment and will therefore be omitted.

FIG. 9 and FIG. 10 show fuel filtration devices according to a third embodiment of the invention, and FIG. 9 is a partial cross section of the filtration device and FIG. 10 shows the plane view of the entire filtration device.

The third embodiment adopts a plurality of dimples in place of the plurality of concavities and convexities of the first and second embodiments. The use of the filter medium of the invention is the same as in the first and second embodiments.

In other words, as in the first and second embodiments, the fuel filtration device 10 is connected via the connecting member 13 to the upstream side of the fuel pump 3 that is located in the fuel tank 1 as shown in FIG. 11 and FIG. 12. The fuel filtration device 10 is formed from the non-woven fabric of the invention as explained with FIGS. 1 to 3. In addition, as in the first embodiment, the fuel filtration device 10 is formed with one filter medium that has an upper filter medium portion 11 and a lower filter medium portion 12. Then, both filter medium portions 11 and 12 are folded at a central folding portion 19, and each overlapping periphery portions 17a and 17b are bonded using a heat welding method such as ultrasonic welding or electric welding, or they are joined using an adhesive, and an inner portion space 14 is formed in the inner portion.

The fuel filtration device 10 is formed from the non-woven fabric of the invention, and takes on a rectangular shape as shown in FIG. 10. A plurality of dimples that are conical dents are formed on the upper filter medium portion 11 by a method such as applying pressure to the surface using an object with projections or the like. The end portions 20a of the dimples 20 contact the inner surface of the lower filter medium. Heat welding is performed or adhesive is applied on the contacting portion as needed, as well as on the periphery portions 17a and 17b.

According to the third embodiment, no matter how many or in what direction the contacting portions are provided, all of the fuel that enters the inner portion space 14 as shown in FIG. 10 can smoothly flow in the connecting member 13 via the central inner portion space 14a. Therefore, the protector 6 that is provided in the inner portion space of the fuel filtration device 10 as shown in FIG. 11 and FIG. 12 can be omitted. Of course, the protector 6 may be used as needed.

A central inner portion space 14a without concavities and convexities is formed in the central portion of the upper side filter medium portion 11, and a through hole 11a into which the end portion of the connecting member 13 can be inserted is provided on the upper side filter medium portion 11 of the central inner portion space 14. Also, a flange 13a and a tubular protruding portion 13b that extends to the end of the flange 13a are provided on the end of the connecting member 13. The tubular protruding portion 13b is inserted in the through hole 11a, and the outer surface of the upper side filter medium portion 11 around the through hole 11a and the surface of the flange 13a are fixed using an adhesive. The other edge of the connecting member 13 is connected to the fuel pump 3 that is located in the fuel tank 1 as shown in FIG. 11 and FIG. 12.

Further, according to the third embodiment, an example in which the dimples 20 that are provided on the filter medium extend downward perpendicular to the upper filter medium was explained. However, they can be arranged upwards perpendicular to the lower side filter medium portion 12, or they can be provided on both the upper side filter medium portion 11 and the lower side filter medium portion 12 so that they do not overlap, and, further, they may contact so that the ends overlap each other. Also, the filter medium was explained using a one-part folded filter medium, but two seperate filter medium portions. glued together and joined may be used.

The invention is characterized by the use of adhesive fibers in the filter medium, and is not limited to the filter shapes explained above. For example, the filter may additionally include a protector in the filter medium. Naturally, the design may be changed without departing from the scope of the invention as defined by the claims.

According to the embodiments of the invention, the filter medium of the fuel filtration device is formed of the non-woven fabric that includes the material fibers and the adhesive fibers, and by melting the adhesive fibers, the fibers are joined. As a result, the peeling of the fiber hairs that is caused by the raising of the fiber hairs is reduced even on a cross-section of the filter medium, as well as on the surface of the filter medium. Therefore, a cover layer that covers the surface of the filter medium can be eliminated. Further, because the adhesive fibers that coat the outside periphery of the material fibers remain, the strength of the entire non-woven fabric increases. Even if it is in friction with the bottom wall 9 of the fuel tank 1, it is durable and a screen layer of the filter medium can be eliminated. Because the cover layer or the screen layer can be eliminated in this manner, the number of components can be reduced. Also, because the assembly process for the cover layer and the screen layer can be omitted, the production process can be simplified and the production cost can be reduced. Further, because the fuel filtration device can be formed using only non-woven fabric as the filter medium, the weight of the device can be reduced.

Also, as in the above embodiments, by using a multi-layer structure in which at least two filter medium layers are layered, or a multi-layer structure that has a coarse and dense layer, for example, even in a three-layer structure that has a coarse and dense layer, the fiber hairs are prevented from being raised on all of the outer surface. As a result, a cover layer that covers the surface of the filter medium and the screen layer can be eliminated. Therefore, the number of components in the filtration device can be reduced, the production processes simplified, and the production costs reduced. Further, because adjacent filter medium layers can be joined simultaneously, the process for joining the filter mediums can also be eliminated.

Further, the filter medium is formed by folding a one-part filter medium and joining both halves thereof, or by joining two separate filter medium portions. Therefore, the production of the fuel filtration device can be simplified, and the production costs can be reduced.

Also, by providing a plurality of concavities and convexities on at least one of the surfaces of the filter medium, a larger filter surface area is obtained compared to a flat filter medium. Therefore, the weight of the fuel filtration device can be reduced and the size can be decreased. Also, the strength of the fuel filtration device can be increased as a result of the concavities and convexities of the filter medium. Further, the inner portion space can be sufficiently secured due to the concavities and convexities, and the protector can be eliminated. By making the concavities and convexities into dimples, the filter medium surface area can be increased, and the strength of the fuel filtration device is increased by the concavities and convexities formed by dimples, and, further, the inner portion space can be sufficiently secured due to the dimples.

By forming a filter medium having a surface made of the non-woven fabric and a surface made of the mesh screen, the surface that is made of the mesh screen is the bottom surface of the fuel filtration device and is the surface that comes in contact with the bottom wall of the fuel tank. Even if the fuel tank shakes due to vibrations, and the fuel tank and the fuel filtration device are in strong friction with one another, the danger of breakage therebetween can be lowered.

By providing the fuel filtration device upstream of the fuel pump, the fuel filtration to the fuel pump can be reliably carried out.

## Claims

1. A fuel filtration device provided with a filter medium (5) of non-woven fabric through which liquid passes and which has a multi-layer structure in which at least two layers (51, 52, 53) are overlapped on top of one another, an inner portion space (14) that is surrounded by the filter medium (5) and in which liquid accumulates, and a communicating path (13) that provides communication between the inner portion space (14) and an outside of the inner portion space (14) and delivers the liquid in the inner portion space (14) to the outside of the inner portion space (14), the fuel filtration device
**characterized in that**:
the non-woven fabric of the filter medium (5) includes material fibers (31) and adhesive fibers (32), the material fibers (31) being joined by melting the adhesive fibers (32),
by melting the adhesive fibers (32) not only the material fibers (31) within each layer but also adjacent layers of the multi-layer structure are joined and integrated in other to prevent fiber hairs of the filter medium from being peeled off, and
the filter medium (5) has a gradient of density formed by a course layer (52) with low fiber density and a dense layer (53) with high fiber density, wherein the coarse layer (52) with low fiber density is on the outer side of the filter medium and the dense layer (53) with high fiber density is on the inner side of the filter medium.

2. The filtration device according to Claim 1, **characterized in that** the material fibers (31) have a melting point higher than the melting point of the adhesive fibers (32).

3. The filtration device according to any one of Claims 1 and 2, **characterized in that** the filter medium (5) is formed by folding the filter medium (5) and joining both halves of the folded filter medium (5) so that two opposing surfaces are formed.

4. The filtration device according to any one of Claims 1 and 2, **characterized in that** the filter medium (5) is formed from a first filter medium portion (11) having a first surface and a second filter medium portion (12) having a second surface by joining the first filter medium portion (11) and the second filter medium portion (12) so that the first surface faces the second surface to form two opposing surfaces.

5. The filtration device according to any one of Claims 3 and 4, **characterized in that** a plurality of concavities and convexities (15) are provided on at least one of the two opposing surfaces of the filter medium (5).

6. The filtration device according to Claim 5, **characterized in that** the concavities and convexities are dimples (20).

7. The filtration device according to any one of Claims 1 to 6, **characterized in that** the filter medium (5) includes a surface made of the non-woven fabric and a surface made of a mesh screen.

## Patentansprüche

1. Kraftstofffilterungsvorrichtung, die ein Filtermedium (5) aus einem nicht-gewebten Stoff, durch das Flüssigkeit hindurchtritt und das eine mehrschichtige Struktur aufweist, in der wenigstens zwei Schichten (51, 52, 53) übereinander liegen, einen Innenabschnittsraum (14), der von dem Filtermedium (5) umgeben ist und in dem sich Flüssigkeit ansammelt, und einen Verbindungsweg (13), der eine Verbindung zwischen dem Innenabschnittsraum (14) und einem Außenbereich des Innenabschnittsraums (14) herstellt und die Flüssigkeit in dem Innenabschnittsraum (14) zu dem Außenbereich des Innenabschnittsraums (14) transportiert, umfasst, wobei die Kraftstofffilterungsvorrichtung **dadurch gekennzeichnet ist, dass**:
- der nicht-gewebte Stoff des Filtermediums (5) Materialfasern (31) und Klebemittelfasern (32) umfasst, wobei die Materialfasern (31) durch Schmelzen der Klebemittelfasern (32) verbunden sind,
- durch Schmelzen der Klebemittelfasern (32) nicht nur die Materialfasern (31) innerhalb jeder Schicht sondern auch benachbarte Schichten der mehrschichtigen Struktur verbunden und zusammengeschlossen werden, um zu verhindern, dass sich Faserhaare des Filtermediums ablösen, und
- das Filtermedium (5) einen Dichtegradienten besitzt, der durch eine grobe Schicht (52) mit geringer Faserdichte und einer dichten Schicht (52) mit hoher Faserdichte gebildet ist, wobei sich die grobe Schicht (52) mit geringer Faserdichte auf der Außenseite des Filtermediums und die dichte Schicht (53) mit hoher Faserdichte auf der Innenseite des Filtermediums befindet.

2. Filterungsvorrichtung nach Anspruch 1, **dadurch gekennzeichnet, dass** die Fasermaterialien (31) einen Schmelzpunkt besitzen, der höher als der Schmelzpunkt der Klebefasern (32) liegt.

3. Filterungsvorrichtung nach einem der Ansprüche 1 und 2, **dadurch gekennzeichnet, dass** das Filtermedium (5) durch Falten des Filtermediums (5) und Verbinden beider Hälften des gefalteten Filtermediums (5) derart, dass zwei gegenüberliegende Oberflächen gebildet sind, gebildet wird.

4. Filterungsvorrichtung nach einem der Ansprüche 1 und 2, **dadurch gekennzeichnet, dass** das Filtermedium (5) aus einem ersten Filtermediumabschnitt (11) mit einer ersten Oberfläche und einem zweiten Filtermediumabschnitt (12) mit einer zweiten Oberfläche durch Verbinden des ersten Filtermediumabschnitts (11) und des zweiten Filtermediumabschnitts (12) gebildet ist, und zwar derart, dass die erste Oberfläche der zweiten Oberfläche gegenüberliegt, um zwei gegenüberliegende Oberflächen zu bilden.

5. Filterungsvorrichtung nach einem der Ansprüche 3 und 4, **dadurch gekennzeichnet, dass** eine Mehrzahl von Konkavitäten und Konvexitäten (15) auf wenigstens einer der zwei gegenüberliegenden Oberflächen des Filtermediums (5) vorgesehen sind.

6. Filterungsvorrichtung nach Anspruch 5, **dadurch gekennzeichnet, dass** die Konkavitäten und Konvexitäten Vertiefungen (20) sind.

7. Filterungsvorrichtung nach einem der Ansprüche 1 bis 6, **dadurch gekennzeichnet, dass** das Filtermedium (5) eine aus dem nicht-gewebten Stoff hergestellte Oberfläche und eine aus einem Maschensieb hergestellte Oberfläche umfasst.

## Revendications

1. Dispositif de filtration de carburant doté d'un moyen de filtre (5) constitué d'une étoffe non tissée, au travers duquel un liquide passe et qui comporte une structure multicouche dans laquelle au moins deux couches (51, 52, 53) sont superposées, un espace de partie intérieure (14) qui est entouré par le moyen de filtre (5) et dans lequel le liquide s'accumule, et un passage communiquant (13) qui permet une communication entre l'espace de partie intérieure (14) et l'extérieur de l'espace de partie intérieure (14), et délivre le liquide dans l'espace de partie intérieure (14) vers l'extérieur de l'espace de partie intérieure (14), le dispositif de filtration de carburant étant **caractérisé en ce que** :
l'étoffe non tissée du moyen de filtre (50) comprend des fibres de matériaux (31) et des fibres adhésives (32), les fibres de matériaux (31) étant liées en faisant fondre les fibres adhésives (32),
en faisant fondre les fibres adhésives (32), non seulement les fibres de matériaux (31) à l'intérieur de chaque couche, mais également les couches adjacentes de la structure multicouche sont réunies et intégrées de manière à empêcher des fils de fibres du moyen de filtre de se détacher, et
le moyen de filtre (5) comporte un gradient de densité formé par une couche grossière (52) comportant une faible densité de fibres et une couche dense (53) comportant une densité élevée de fibres, où la couche grossière (52) comportant une faible densité de fibres se situe sur le côté extérieur du moyen de filtre et la couche dense (53) comportant une quantité élevée de fibres se situe sur le côté intérieur du moyen de filtre.

2. Dispositif de filtration selon la revendication 1, **caractérisé en ce que** les fibres de matériaux (31) présentent un point de fusion supérieur au point de fusion des fibres adhésives (32).

3. Dispositif de filtration selon l'une quelconque des revendications 1 et 2, **caractérisé en ce que** le moyen de filtre (5) est formé en pliant le moyen de filtre (5) et en liant les deux moitiés du moyen de filtre plié (5) de sorte que deux surfaces opposées soient formées.

4. Dispositif de filtration selon l'une quelconque des revendications 1 et 2, **caractérisé en ce que** le moyen de filtre (5) est formé à partir d'une première partie de moyen de filtre (11) comportant une première surface et d'une seconde partie de moyen de filtre (12) comportant une seconde surface en liant la première partie de moyen de filtre (11) et la seconde partie de moyen de filtre (12) de sorte que la première surface soit face à la seconde surface afin de former deux surfaces opposées.

5. Dispositif de filtration selon l'une quelconque des revendications 3 et 4, **caractérisé en ce qu'**une pluralité de concavités et de convexités (15) sont prévues sur au moins une des deux surfaces opposées du moyen de filtre (5).

6. Dispositif de filtration selon la revendication 5, **caractérisé en ce que** les concavités et les convexités sont des ondulations (20).

7. Dispositif de filtration selon l'une quelconque des revendications 1 à 6, **caractérisé en ce que** le moyen de filtre (5) comprend une surface réalisée à partir de l'étoffe non tissée et une surface constituée d'un tamis à mailles.
